# EUROPÄISCHE PATENTSCHRIFT

(11) **EP 1 422 099 B1**
(45) Veröffentlichungstag und Bekanntmachung des Hinweises auf die Patenterteilung: **05.03.2008**
(21) Anmeldenummer: 03018289.3
(22) Anmeldetag: 12.08.2003
(51) Int. Cl.: B60J 7/16, B60J 7/10

(54) **Aufbau für ein Kraftfahrzeug**
Body structure for a motor vehicle
Structure pour un véhicule automobile

(30) Priorität: 20.11.2002 DE 10254133
(43) Veröffentlichungstag der Anmeldung: 26.05.2004
(73) Patentinhaber: Dr.Ing. h.c. F. Porsche Aktiengesellschaft, 70435 Stuttgart (DE)
(72) Erfinder: Stoffels, Oliver, 71634 Ludwigsburg (DE); Scholz, Andre, 75446 Wiernsheim (DE); Meier, Thomas, 76287 Rheinstetten (DE)

(56) Entgegenhaltungen:
- EP-A- 0 454 279
- DE-A- 4 116 223
- US-A- 3 476 437
- US-A- 4 767 154
- US-A- 4 852 938
- US-A- 5 489 134
- US-B1- 6 257 650
- PATENT ABSTRACTS OF JAPAN vol. 015, no. 333 (M-1150), 23. August 1991 (1991-08-23) & JP 03 128726 A (SUZUKI MOTOR CORP), 31. Mai 1991 (1991-05-31)

## Beschreibung

Die Erfindung betrifft einen Aufbau für ein Kraftfahrzeug, insbesondere einen Personenkraftwagen der Sportwagengattung nach dem Oberbegriff des Patentanspruchs 1. Ein solcher Aufbau ist aus der JP 03128725 A bekannt.

Ein weiterer bekannter Aufbau eines Personenkraftwagens, DE 197 52 068, ist mit einem Windschutzscheibenrahmen und einer Rollbügelvorrichtung versehen, die zwei quer zur Fahrzeuglängsrichtung sich erstreckende und mit Abstand zueinander angeordneten Einzelrollbügel aufweist. Ein Dach deckt einen Bereich von dem Windschutzscheibenrahmen bis zur Rollbügelvorrichtung ab, wobei das Dach aus einer Schließstellung in eine abgesenkte Stellung und vice versa beweglich ist.

In der DE 198 25 651 C2 geht ein Kraftwagen mit einem zu öffnenden Verdeck hervor, bei dem zwischen Sitzen und einer an einem Aufbau angebrachten Rollbügelanordnung eine Schutzwand aus Glas vorgesehen ist. Das Verdeck umfasst ein Dach, das einen Fahrgastraum des Kraftwagens von einer Windschutzscheibe aus überdeckt und aus einer Abdeckstellung in Offenstellung und umgekehrt bewegbar ist.

Aus der DE- AUTOFOCUS, September/Oktober 2002, Seite 33, geht ein Sportwagen in Coupeform hervor, dessen Dach zwei seitliche in Fahrzeuglängsrichtung verlaufende konvexe Wölbungen umfasst, zwischen denen sich ein konkaver Einzug erstreckt. Diese Dachausbildung ist als Double Bubble ( = doppelte Kuppel) bezeichnet.

Es ist Aufgabe der Erfindung einen Aufbau eines Personenkraftwagens mit einem Windschutzscheibenrahmen, einer steifen Rollbügelvorrichtung und einem abnehmbaren Dach zu schaffen, das definierten Formfestlegungen des Windschutzscheibenrahmens sowie der Rollbügelvorrichtung folgt und bei relativ niedriger Dachhöhe entlang einer Mittellängsebene in seitlichen Bereichen Insassen eine vertretbare Kopffreiheit bietet.

Dabei sollte das Dach aber auch eine hohe Festigkeit und ein geringes Gewicht aufweisen.

Erfindungsgemäß wird diese Aufgabe durch die Merkmale des Patentanspruchs 1 gelöst. Weitere, die Erfindung ausgestaltende Merkmale sind in den Unteransprüchen enthalten.

Die mit der Erfindung hauptsächlich erzielten Vorteile sind darin zu sehen, dass der Aufbau ein zwischen einem Windschutzscheibenrahmen und einer Rollbügelvorrichtung einen Fahrgastraum überspannendes, abnehmbares Dach aufweist, das an die vorgegebenen voneinander abweichenden Formverläufe des Windschutzscheibenrahmens und der Rollbügelvorrichtung angepasst ist, was nicht nur die weitgehend freie Gestaltung der zuletzt genannten erleichtert, sondern auch noch durch die äußere Form des Dachs eine besondere ästhetische Wirkung hervorruft. Dies wird dadurch unterstützt, dass im Querschnitt des Dachs gesehen in einem mittleren Bereich zwischen Windschutzscheibenrahmen und Rollbügelvorrichtung seitliche Dachabschnitte als Wölbungen und der mittlere Dachabschnitt als eine dazwischenliegende Ebene ausgebildet ist. Durch die seitlichen Dachabschnitte bzw. Wölbungen lässt sich auch die Kopffreiheit der Insassen bei einem Personenkraftwagen der Sportwagenkategorie optimieren. Die Rollbügelvorrichtung umfasst Einzelrollbügel, die zur Erzielung einer gezielten Festigkeit an einander zugekehrten Schenkel mit einem Querträger abgestützt sind, wobei entlang dieses Querträgers der mittlere Dachabschnitt und über Teilbereiche der Einzelrollbügel die seitlichen Dachabschnitte des Dachs verlaufen, wodurch eine karosseriearchetektonische Geschlossenheit erzielt wird. Schließlich lassen sich in Öffnungen, die die Einzelrollbügel bzw. der Querträger sowie die Aufbauwände begrenzen, auf einfache Weise Durchsichtscheiben aus Glas einsetzen.

In der Zeichnung ist eine Ausführungsbeispiel der Erfindung dargestellt, das nachstehend näher erläutert wird.

Es zeigen
- Fig. 1: eine Ansicht von oben auf einen Personenkraftwagen mit dem Aufbau nach der Erfindung,

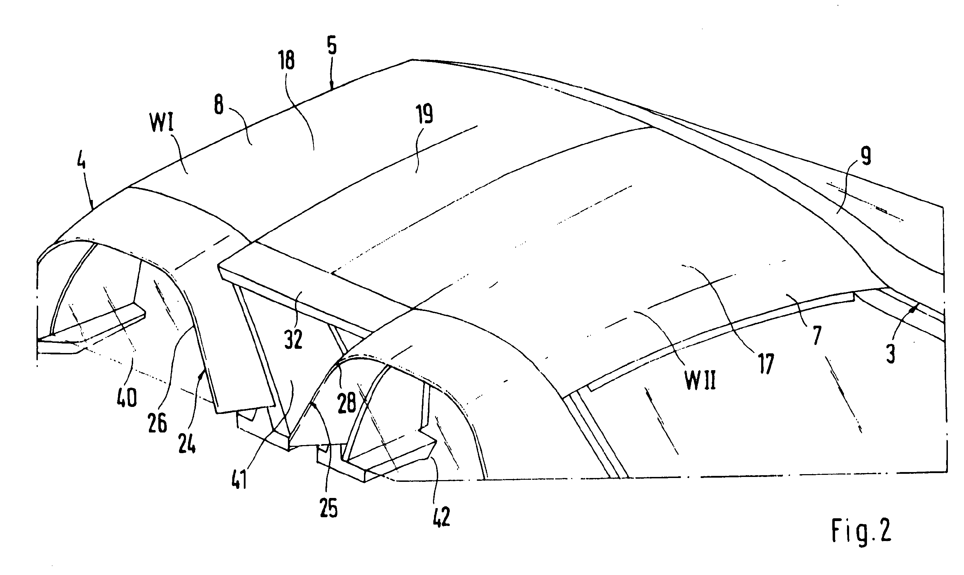

- Fig. 2: eine Schrägansicht von oben auf den Personenkraftwagen, und zwar von vorne links,
- Fig. 3: eine Ansicht von vorne auf den Personenkraftwagen,
- Fig. 4: eine Ansicht von hinten auf den Personenkraftwagen,
- Fig. 5: einen Schnitt nach der Linie V-V der Fig. 1.

Ein Personenkraftwagen 1 der Sportwagengattung umfasst einen Aufbau 2 mit einem Windschutzscheibenrahmen 3 und einer Rollbügelvorrichtung 4. Ein abnehmbares Dach 5 deckt einen Fahrgastraum 6 ab und ist am Windschutzscheibenrahmen 3 und an der Rollbügelvorrichtung 4 mittels geeigneter Befestigungsmittel in Lage gehalten. Das in einem Stauraum - nicht dargestellt - des Personkraftwagens 1 unterbringbare Dach 5 besteht aus zwei in einer Mittellängsebene A-A des Personenkraftwagens 1 zusammengesetzten Dachelementen 7 und 8, wobei jedes formsteife Dachelement z.B. aus leichtgewichtigem, jedoch hochfestem Werkstoff bspw. glasfaserverstärktem Kunststoff - CFK - besteht.

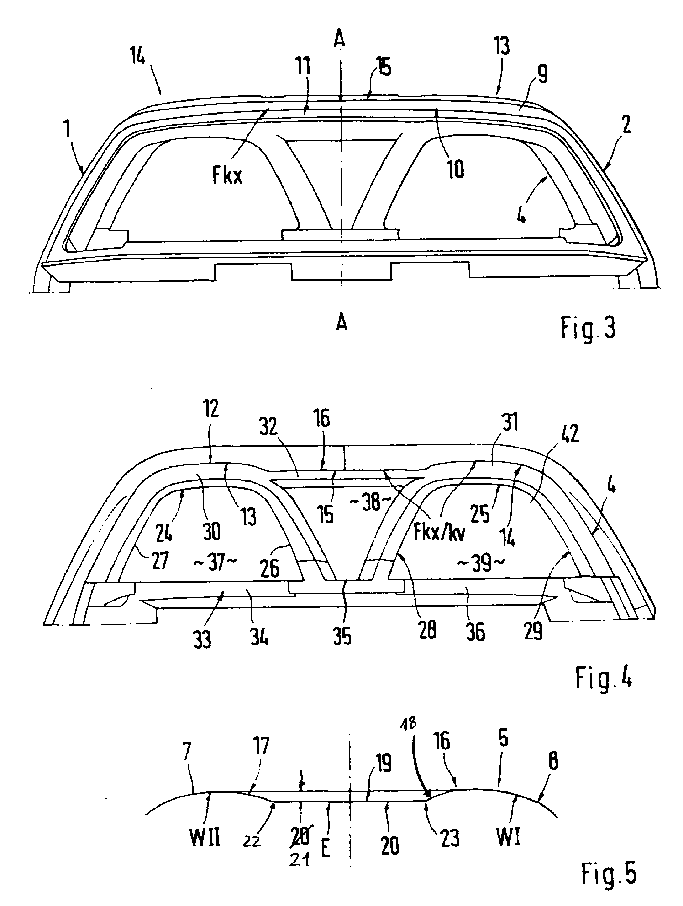

Der Windschutzscheibenrahmen 3 ist mit einem dem Dach 5 zugekehrten Querrahmen 9 versehen, der von vorne auf den Personenkraftwagen gesehen - Fig. 3 - eine Formlinie 10 mit einem konvexen Formverlauf Fkx aufweist, dem eine vordere Dachlinie 11 des Dachs 5 folgt. Die Rollbügelvorrichtung 4 weist benachbart dem Dach 5 ein Querteil 12 auf, das von der Rückseite des Personenkraftwagens aus betrachtet - Fig. 4 - zwei konvexe äußere Formabschnitte 13 und 14 sowie eine mittleren konkaven Formabschnitt 15 umfasst, welche Formabschnitte 13,14 und 15 einen Formverlauf Fkx/kv bilden. Eine hintere Dachlinie 16 des Dachs 5 ist an diesen Formverlauf Fkx/kv angepasst. Dabei besitzt das Dach 5 in Fahrzeuglängsrichtung B-B gesehen zwei seitliche Dachabschnitte 17 und 18 und einen mittleren Dachabschnitt 19, der nach Art eines in Richtung Fahrgastraum 6 eingeformten sickenartigen Einzugs 20 zwischen den seitlichen Dachabschnitten 17 und 18 verläuft. Der Einzug 20 weist eine Tiefe 21 auf, die sich in Fahrtrichtung von der Rollbügelvorrichtung 4 aus gleichmäßig vergrößert.

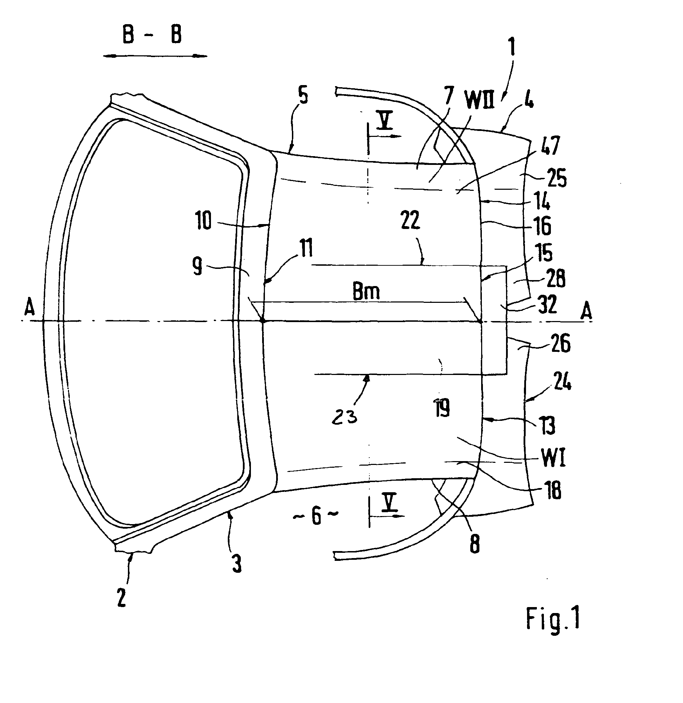

Gemäß Fig. 5, die einen Querschnitt durch das Dach 5 wiedergibt, sind in einem Bereich Bm - Fig. 1 - zwischen Windschutzscheibenrahmen 3 und Rollbügelvorrichtung 4 die seitlichen Dachabschnitte 17 und 18 als Wölbungen Wl und Wll ausgebildet. Dagegen ist der mittlere Dachabschnitt 19 als eine Ebene E dargestellt, wobei von oben auf das Dach 5 gesehen - Fig.1- zwischen den seitlichen Dachabschnitten 17 und 18 bzw. dem mittleren Dachabschnitt 19 in Fahrzeuglängsrichtung B-B verlaufende sichtbare Konturlinien 22 und 23 vorgesehen sind. Im Ausführungsbeispiel sind die Konturlinien 22 und 23 parallel zur Mittellängsebene A-A ausgerichtet. Denkbar ist aber auch ein anderer Verlauf der Konturlinien 22 und 23 zueinander bspw. ein konischer.

Die Rollbügelvorrichtung 4 umfasst zwei quer zur Fahrzeuglängsrichtung B-B mit Abstand zueinander angeordnete Einzelrollbügel 24 und 25, die aufrechte Schenkel 26 und 27 bzw. 28 und 29 aufweisen - Fig. 4 -. Die in Richtung Aufbau 2 konisch sich erstreckenden Schenkel 26 und 27 sowie 28 und 29 münden in bogenartige Stege 30 und 31. Dabei sind die einander zugekehrten Schenkel 26 und 28 mittels eines horizontal ausgerichteten Querträgers 32 der Rollbügelvorrichtung 4 abgestützt, auf dem der mittlere Dachabschnitt 19 aufliegt. Die Einzelrollbügel 24 und 25 sowie der Querträger 32 bestehen hochfestem Werkstoff bspw. kohlefaserverstärktem Kunststoff - CFK - und sind in eine Aufbaustruktur 33 aus gleichem Werkstoff bzw. Kunststoff integriert. Schließlich begrenzen die Einzelrollbügel 24 und 25, der Querträger 32 und Aufbauwände 34, 35 und 36 trapezförmige Öffnungen 37, 38 und 39, in die Durchsichtscheiben 40, 41 und 42 aus Glas eingesetzt sind.

## Patentansprüche

1. Aufbau für ein Kraftfahrzeug, insbesondere Personenkraftwagen der Sportwagengattung, mit einem Windschutzscheibenrahmen (3), einer Rollbügelvorrichtung (4) und einem abnehmbaren formsteifen Dach (5), das einen Bereich zwischen dem Windschutzscheibenrahmen (3) und der Rollbügelvorrichtung (4) abdeckt, **dadurch gekennzeichnet, dass** das Dach (5) einerseits einem konvexen Formverlauf (Fkx) des Windschutzscheibenrahmens (3) und andererseits einem aus konvexen Formabschnitten (13 und 14) und einem konkaven Formabschnitt (15) bestehenden Formverlauf (Fkx/kv) der Rollbügelvorrichtung (4) folgt und eine dadurch definierte Formstruktur aufweist, dergestalt, dass das Dach (5) in Fahrzeuglängsrichtung (B-B) des Kraftfahrzeugs (1) gesehen zumindest bereichsweise zwei seitliche Dachabschnitte (17 und 18) und einen mittleren Dachabschnitt (19) aufweist, der nach Art eines in Richtung Fahrgastraum (6) eingeformten sickenartigen Einzugs (20) zwischen den seitlichen Dachabschnitten (17 und 18) verläuft.

2. Aufbau nach Anspruch 1, **dadurch gekennzeichnet, dass** im Querschnitt des Dachs (5) gesehen zwischen Windschutzscheibenrahmen (3) und Rollbügelvorrichtung (4) die seitlichen Dachabschnitte (17 und 18) als Wölbungen (WI und WII) und der mittlere Dachabschnitt (19) als eine dazwischenliegende Ebene (E) ausgebildet ist.

3. Aufbau nach einem oder mehreren der vorangehenden Ansprüche, **dadurch gekennzeichnet, dass** von oben auf das Dach (5) gesehen zwischen den seitlichen Dachabschnitten (17 und 18) und dem mittleren Dachabschnitt (19) sichtbare in Fahrzeuglängsrichtung (B-B) verlaufende Konturlinien (22 und 23) vorgesehen sind.

4. Aufbau nach den Ansprüchen 1 und 2, **dadurch gekennzeichnet, dass** der Einzug (20) sich zwischen Windschutzscheibenrahmen und Rollbügelvorrichtung (4) kontinuierlich vergrößert.

5. Aufbau mit einer zwei in Fahrzeugquerrichtung beabstandete Einzelrollbügel (24, 25) aufweisenden Rollbügelvorrichtung (4), welche Einzelrollbügel aufrechte Schenkel aufweisen, nach einem oder mehreren der vorangehenden Ansprüche, **dadurch gekennzeichnet, dass** einander zugekehrten Schenkel (26 und 28) der Einzelrollbügel (24 und 25) mittels eines Querträgers (32) abgestützt sind, entlang dem der mittlere Dachabschnitt (19) des Dachs (5) verläuft

6. Aufbau nach dem Anspruch 5, **dadurch gekennzeichnet, dass** die Einzelrollbügel (24 und 25), der Querträger (32) und Aufbauwände (34, 35 und 36) Öffnungen (37, 38 und 39) begrenzen, in die Durchsichtscheiben (40, 41 und 42) eingesetzt sind.

7. Aufbau nach einem der Ansprüche 5 und 6, **dadurch gekennzeichnet, dass** die Einzelrollbügel (24 und 25) und der Querträger (32) aus hochfestem Werkstoff bspw. kohlefaserverstärktem Kunststoff bestehen.

8. Aufbau nach Anspruch 7, **dadurch gekennzeichnet, dass** die Einzelrollbügel (24 und 25) und der Querträger (32) in eine Aufbaustruktur (33) integriert sind, die aus hochfestem Werkstoff bspw. kohlefaserverstärktem Kunststoff besteht.

9. Aufbau nach einem oder mehreren der vorangehenden Ansprüche, **dadurch gekennzeichnet, dass** das Dach (5) aus zwei in einer Mittellängsebene (A-A) des Kraftfahrzeugs (1) zusammengesetzten Dachelementen (7) besteht.

10. Aufbau nach Anspruch 9, **dadurch gekennzeichnet, dass** jedes Dachelement (7 oder 8) aus hochfestem Werkstoff bspw. glasfaserverstärktem Kunststoff besteht.

## Claims

1. Body structure for a motor vehicle, in particular passenger vehicle of the sports car type, with a windscreen frame (3), a roll-bar device (4) and a detachable, dimensionally stable roof (5) which covers a region between the windscreen frame (3) and the roll-bar device (4), **characterized in that** the roof (5) firstly follows a convex moulded profile (Fkx) of the windscreen frame (3) and secondly follows a moulded profile (Fkx/kv) of the roll-bar device (4), which moulded profile comprises convex moulded sections (13 and 14) and a concave moulded section (15), and has a moulded structure defined as a result such that the roof (5) has, at least in some regions, as seen in the longitudinal direction (B-B) of the motor vehicle (1), two lateral roof sections (17 and 18) and a central roof section (19) which runs in the manner of a bead-like insert (20) between the lateral roof sections (17 and 18), the insert being moulded inwards in the direction of the passenger compartment (6).

2. Body structure according to Claim 1, **characterized in that**, as seen in the cross section of the roof (5), the lateral roof sections (17 and 18) between windscreen frame (3) and roll-bar device (4) are designed as curvatures (WI and WII) and the central roof section (19) is designed as a plane (E) situated in between.

3. Body structure according to one or more of the preceding claims, **characterized in that**, as seen in the top view of the roof (5), visible contour lines (22 and 23) which run in the longitudinal direction (B-B) of the vehicle are provided between the lateral roof sections (17 and 18) and the central roof section (19).

4. Body structure according to Claims 1 and 2, **characterized in that** the insert (20) increases continuously between the windscreen frame and roll-bar device (4).

5. Body structure with a roll-bar device (4) which has two individual roll bars (24, 25) spaced apart in the transverse direction of the vehicle, which individual roll bars have upright limbs, according to one or more of the preceding claims, **characterized in that** mutually facing limbs (26 and 28) of the individual roll bars (24 and 25) are supported by means of a cross member (32) along which the central roof section (19) of the roof (5) runs.

6. Body structure according to Claim 5, **characterized in that** the individual roll bars (24 and 25), the cross member (32) and body-structure walls (34, 35 and 36) delimit openings (37, 38 and 39) into which windows (40, 41 and 42) are inserted.

7. Body structure according to either of Claims 5 and 6, **characterized in that** the individual roll bars (24 and 25) and the cross member (32) are composed of high-strength material, for example carbon-fibre-reinforced plastic.

8. Body structure according to Claim 7, **characterized in that** the individual roll bars (24 and 25) and the cross member (32) are integrated in a body structure (33) which is composed of high-strength material, for example carbon-fibre-reinforced plastic.

9. Body structure according to one or more of the preceding claims, **characterized in that** the roof (5) comprises two roof elements (7) put together in a centre longitudinal plane (A-A) of the motor vehicle (1).

10. Body structure according to Claim 9, **characterized in that** each roof element (7 or 8) is composed of high-strength material, for example glass-fibre-reinforced plastic.

## Revendications

1. Carrosserie pour un véhicule automobile, notamment un véhicule de tourisme de type voiture de sport, comprenant un cadre de pare-brise (3), un dispositif à arceau de sécurité (4) et un toit indéformable amovible (5) qui couvre une zone entre le cadre de pare-brise (3) et le dispositif à arceau de sécurité (4), **caractérisée en ce que** le toit (5) suit d'un côté un tracé de forme convexe (Fkx) du cadre de pare-brise (3) et de l'autre côté un tracé de forme (Fkx/kv) du dispositif à arceau de sécurité (4) constitué des sections de forme convexe (13 et 14) et d'une section de forme concave (15) et présente une structure à la forme ainsi définie de telle sorte que le toit (5), vu dans le sens longitudinal (B-B) du véhicule automobile (1), présente au moins par zones deux sections de toit latérales (17 et 18) et une section de toit centrale (19) qui s'étend à la manière d'un enfoncement (20) de type moulure façonné en direction de l'habitacle (6) entre les sections de toit latérales (17 et 18).

2. Carrosserie selon la revendication 1, **caractérisée en ce que**, vu dans la section transversale du toit (5), entre le cadre de pare-brise (3) et le dispositif à arceau de sécurité (4), les sections de toit latérales (17 et 18) sont réalisées sous la forme de moulures concaves (WI et WII) et la section de toit centrale (19) sous la forme d'un plan (E) situé entre les deux.

3. Carrosserie selon une ou plusieurs des revendications précédentes, **caractérisée en ce qu'**en observant le toit (5) depuis le haut, des lignes de contour (22 et 23) qui s'étendent dans la direction longitudinale du véhicule (B-B) sont visibles entre les sections de toit latérales (17 et 18) et la section de toit centrale (19).

4. Carrosserie selon les revendications 1 et 2, **caractérisée en ce que** l'enfoncement (20) s'agrandit continuellement entre le cadre de pare-brise et le dispositif à arceau de sécurité (4).

5. Carrosserie comprenant un dispositif à arceau de sécurité (4) présentant deux arceaux de sécurité individuels (24, 25) espacés dans la direction transversale du véhicule, lesquels arceaux de sécurité individuels présentent des branches verticales, selon une ou plusieurs des revendications précédentes, **caractérisée en ce que** les branches (26 et 28) dirigées l'une vers l'autre des arceaux de sécurité individuels (24 et 25) sont soutenues au moyen d'une traverse (32) le long de laquelle s'étend la section de toit centrale (19) du toit (5).

6. Carrosserie selon la revendication 5, **caractérisée en ce que** les arceaux de sécurité individuels (24 et 25), la traverse (32) et les parois de la carrosserie (34, 35 et 36) délimitent des ouvertures (37, 38 et 39) dans lesquelles sont insérées des vitres transparentes (40, 41 et 42).

7. Carrosserie selon l'une des revendications 5 et 6, **caractérisée en ce que** les arceaux de sécurité individuels (24 et 25) et la traverse (32) se composent d'un matériau à haute résistance, par exemple une matière plastique renforcée de fibres de carbone.

8. Carrosserie selon la revendication 7, **caractérisée en ce que** les arceaux de sécurité individuels (24 et 25) et la traverse (32) sont intégrés dans une structure de carrosserie (33) qui se compose d'un matériau à haute résistance, par exemple une matière plastique renforcée de fibres de carbone.

9. Carrosserie selon une ou plusieurs des revendications précédentes, **caractérisée en ce que** le toit (5) se compose de deux éléments de toit (7) assemblés dans un plan longitudinal central (A-A) du véhicule automobile (1).

10. Carrosserie selon la revendication 9, **caractérisée en ce que** chaque élément de toit (7 ou 8) se compose d'un matériau à haute résistance, par exemple une matière plastique renforcée de fibres de carbone.
